# EUROPEAN PATENT APPLICATION

(11) **EP 2 642 148 A2**
(43) Date of publication of application: **25.09.2013**
(21) Application number: 13159807.0
(22) Date of filing: 18.03.2013
(51) Int. Cl.: F16D 48/06

(54) **A method for hydraulically filling a clutch without using a calibration routine**

(30) Priority: 21.03.2012 US 201213425984
(71) Applicant: DEERE & COMPANY, Moline, Illinois 61265-8098 (US)
(72) Inventor: Johson, Anthony K, Coffeyville, KS Kansas 67337 (US)
(74) Representative: Lange, Robert

(57) **Abstract**

A method for hydraulically filling a clutch without using a calibration routine. The clutch comprises a spring and a clutch cavity, and the spring and the clutch cavity are positioned inside of the clutch. A valve is associated with the clutch and is configured for allowing a fluid to flow to and from the clutch cavity. The method comprises the step of sending a wakeup current to a valve. The wakeup current is sent to the valve for allowing the fluid to substantially fill the clutch cavity. Still further, the method comprises the step of determining whether the spring is compressed and, also, determining whether a speed ratio of the powertrain is unknown. Further yet, the method comprises the step of sending a ramped hold current that rises relatively gradually to the valve if the spring is compressed and if the speed ratio is unknown.

## Description

The present disclosure relates to a method for hydraulically filling a clutch. More specifically, the present disclosure relates to a method for hydraulically filling a clutch without using a calibration routine.

A powertrain may comprise various gears in constant mesh that are engaged in a select manner by one or more hydraulic clutches for providing a powertrain path from one shaft to another shaft, which, ultimately, results in an active speed ratio corresponding to the engaged gears. Shifting from one speed ratio to another involves releasing one or more of the clutches associated with the active speed ratio and engaging one or more clutches associated with the new, desired speed ratio. To do this, an associated proportional control valve may independently vary the flow and pressure to its respective hydraulic clutch. In some powertrains having just one proportional control valve, only one clutch can be activated at any time and, therefore, a calibration routine requiring one clutch loaded against another clutch is not possible.

Shift quality depends on the several factors associated with each hydraulic clutch, during the filling of the clutch, prior to engagement. Some key factors are the active speed ratio, the length of time that full flow is available to the hydraulic clutch, and the length of time that an amount less than full flow is available to the hydraulic clutch. Various off-line calibration routines have been developed to optimize these times. These routines typically employ opposing clutches or park brakes for introducing a load on the clutch being calibrated. Then, during operation, further adjustments to the calibration parameters, following the calibration routine, may be necessary as the result of temperature, viscosity, and load variations.

What is needed is a method for hydraulically filling the clutch that does not require a calibration routine, yet still results in high shift quality.

This object is met according to the invention by the teaching of claim 1, while features developing the solution in an advantageous manner are set forth in the further claims.

Disclosed is a method for hydraulically filling a clutch without using a calibration routine. The clutch comprises a spring and a clutch cavity, and the spring and the clutch cavity are positioned inside of the clutch. A valve is associated with the clutch and is configured for allowing a fluid to flow to and from the clutch cavity. The method comprises the step of sending a wakeup current to a valve. The wakeup current is sent to the valve for allowing the fluid to substantially fill the clutch cavity. Still further, the method comprises the step of determining whether the spring is compressed and, also, determining whether a speed ratio of the powertrain is unknown. The method further comprises the step of sending a ramped hold current that rises relatively gradually to the valve if the spring is compressed and if the speed ratio is unknown.

The detailed description of the drawings refers to the accompanying figures in which:
FIG 1. is a simplified schematic of a clutch a control system and a powertrain;
FIG. 2 is flow chart of a method for hydraulically filling a clutch when a speed ratio is unknown; and
FIG. 3 is a graph of the method for hydraulically filling the clutch when the speed ratio is unknown.

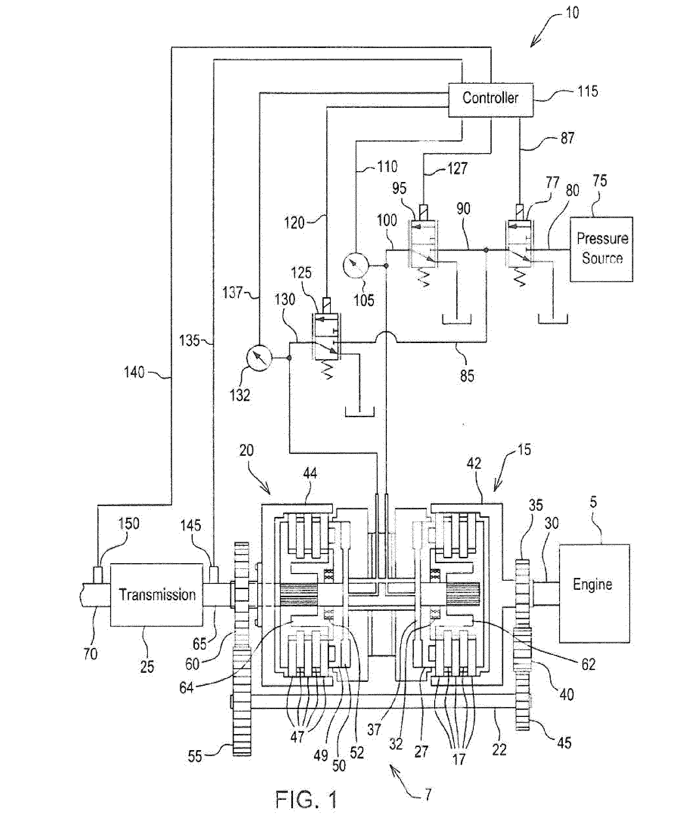

FIG 1. is a simplified schematic of a clutch control system 10 and a powertrain 7. The clutch control system 10 comprises a controller 115, a valve 77, a valve 95, a valve 125, and a pressure source 75. The pressure source 75 provides pressurized fluid to the valve 77 via a line 80. The valve 77 may be connected to the controller 115 via a line 87, the valve 95 via a line 90, and the valve 125 via a line 85. The valve 77 may be a proportional control valve, and may, therefore, open proportionally to the level of current that the controller 115 provides. Alternatively, the valves 95 and 125 may be on/off valves.

The powertrain 7 comprises an engine 5, a transmission 25, a forward clutch 15, and a reverse clutch 20. In the powertrain 7, a gear 35 may be connected to the engine 5 via a shaft 30. The forward clutch 15 may be coupled to gear 35. Gear 35 may mesh with a gear 40, the gear 40 may mesh with a gear 45, and the gear 55 may mesh with the gear 60. The gear 45 and the gear 55 may rotate together via a countershaft 22. The transmission 25 may be connected to a gear 60 via the shaft 65, and the transmission 25 may also be connected to a shaft 70.

A speed sensor 145 may be adjacent to the shaft 65, and the speed sensor 145 may be in communication with the controller 115 via a line 135. Likewise, a speed sensor 150 may be adjacent to the shaft 70, and the speed sensor 150 may be in communication with the controller 115 via a line 140. A pressure gauge 105 may be in communication with a controller 115 via a line 110, and a pressure gauge 132 may be in communication with the controller 115 via a line 137. As discussed, the controller 115 is connected to various components. Although these connections are illustrated via physical lines, the controller 115 may also connect to some or all of the components wirelessly.

The valve 95 may be connected to the controller 115 via a line 127, and it may also be connected to a forward clutch 15 via line 100. The forward clutch 15 may comprise a housing 42, a piston 27, a clutch cavity 37, one or more disks 17, a spring 32, and a member 62. The piston 27 may be adjacent to a clutch cavity 37 and to the one or more disks 17.

When the forward clutch 15 engages, the power flow from the engine 5 bypasses the countershaft 22, thereby rotating the shaft 65 in a forward direction. When the forward clutch 15 disengages, the spring 32 urges the member 62 and the piston 27 away from one another, which allows the one or more disks 17 to separate from one another. Assuming that the reverse clutch 20 is also disengaged, the engine 5 no longer provides power to the transmission 25.

The valve 125 may be connected to the controller 115 via a line 120, and it may also be connected to a reverse clutch 20 via a line 130. The reverse clutch 20 comprises a housing 44, a piston 49, a clutch cavity 50, one or more disks 47, a spring 52, and a member 64. The piston 49 may be adjacent to the clutch cavity 50 and to the one or more disks 47.

When the reverse clutch 20 engages, the power from engine 5 flows through a countershaft 22, thereby rotating the shaft 65 in a reverse direction. Alternatively, when the reverse clutch 20 disengages, the spring 52 may urge the member 64 and the piston 49 away from one another, which then allows the one or more disks 47 to separate from one another. As such, assuming that the forward clutch 15 is also disengaged, the engine 5 can no longer provide power to the transmission 25. Shifting the transmission 25, from one active speed ratio to another active speed ratio, may require releasing and engaging one or more clutches (not shown) of the transmission 25. A powertrain comprising a single clutch or one comprising multiple clutches sharing a single proportional control valve (such as the proportional control valve 77 shown in FIG.1), cannot be calibrated using traditional methods, because traditional methods require a known load for calibration. Further, when the active speed ratio is unknown, a calibrated hold value that correlates with a particular active speed ratio also cannot be used.

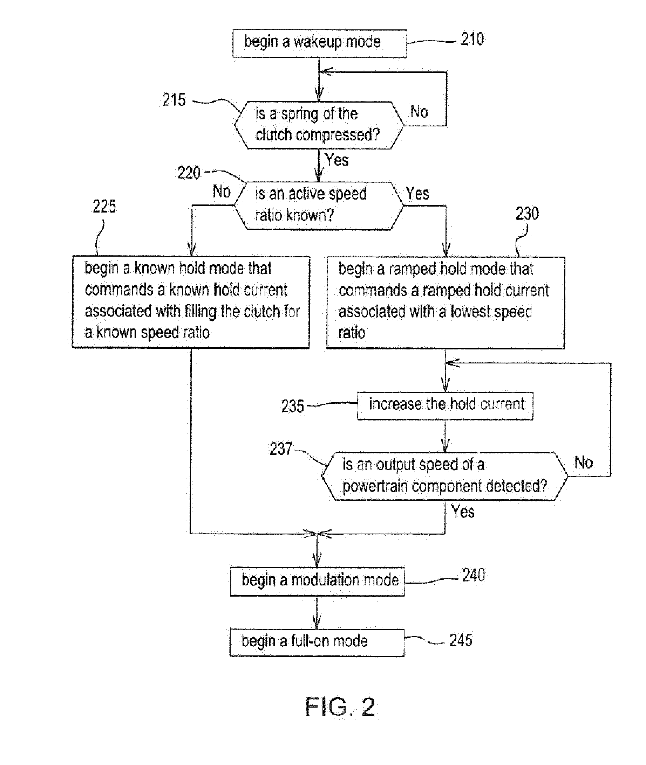

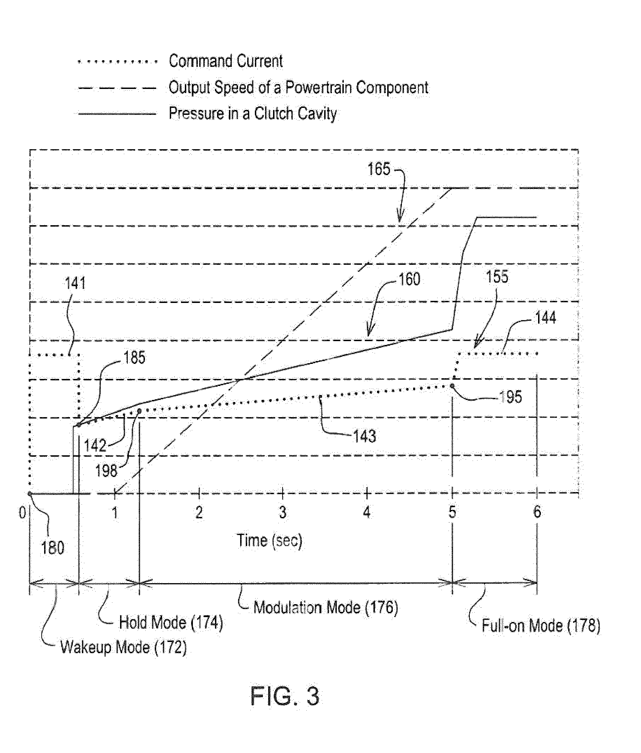

FIG. 2 shows a method for hydraulically filling a clutch when the active speed ratio is unknown, and FIG. 3 shows a graph of the method. In FIG. 3, a curve 155 represents the current commanded by the controller 115 versus time, a curve 160 represents the pressure in the clutch cavity 37 versus time, and a curve 165 represents the output speed of a powertrain component versus time. It is understood that even though the method is illustrated, in FIG. 1, and described using the forward clutch 15, the method could use the reverse clutch 20 or other kinds of clutches.

In act 210, the wakeup mode 172 begins. In the wakeup mode 172, the controller 115 communicates a wakeup current 141 to the valve 77. The wakeup current 141 is shown, in FIG. 3, between points 180 and 185. The wakeup current 141 may be equivalent to a current that opens the valve 77 as far possible. By sending the wakeup current 141 and, thus, opening the valve 77 as far as possible, fluid begins to rapidly fill the clutch cavity 37. To prevent an undesirable overfill of the clutch cavity 37, the valve 77 may transition to a slightly closed position just before the clutch cavity 37 is completely filled. Off-line calibration routines may be used for optimizing the length of time that the controller 115 continues the wakeup mode 172.

Eventually, so much fluid enters the clutch cavity 37 that the spring 32 begins to compress, and in act 215, the controller 115 and the pressure gauge 105 may be used to determine when this occurs. One way of determining when the spring 32 begins to compress is by detecting a pressure inflection point. The pressure inflection point occurs as the rate of pressure increases, in the clutch cavity 37, suddenly decreases, even though the flow rate of fluid entering the clutch cavity 37 remains constant. The pressure inflection point signals compression of spring 32 and, also, signals that the end of the wakeup mode 172 is approaching.

Act 220 is to determine whether the active speed ratio is known. In a high specification transmission, sensors and switches may be employed for determining the active speed ratio. But, in a low specification transmission, the active speed ratio may only be known at certain times. For example, when operating the powertrain 7, as shown in FIG. 1, shuttle shifting may used. Shuttle shifting is the reversing of a direction of motion, and this is achieved via releasing the forward clutch 15 and simultaneously engaging the reverse clutch 20 without changing the active speed ratio. In addition, shuttle shifting also refers to releasing the reverse clutch 20 and simultaneously engaging the forward clutch 15 without changing the active speed ratio. Either way, when shuttle shifting, the active speed ratio before the shuttle shift is known, so the active speed ratio after the shuttle shift is also known.

Act 225 may be referred to as a known hold mode (not shown), and this mode occurs if the active speed ratio is known. Conversely, the combination of acts 230, 235, and 237 may be referred to as a ramped hold mode 174, and this mode occurs if the active speed ratio is unknown. The ramped hold mode 174 is illustrated, in FIG. 3, between points 185 and 190.

Both the known hold mode (not shown) and the ramped hold mode 174 continue filling the clutch cavity 37, and this may begin a short time after detection of the pressure inflection point. In act 225, when the active speed ratio is known, the controller 115 sends a known hold current (not shown) to the valve 77 that has been identified to smoothly engage the forward clutch 15. To do this, the controller 115 may use a look-up table that correlates a given active speed ratio to an optimal known hold current (not shown).

If a clutch is acting upon a single active speed ratio, the known hold current (not shown) is of a constant magnitude, but if a single clutch is acting upon multiple active speed ratios, such as forward clutch 15, a current appropriate for one active speed ratio is likely inappropriate for another. So, in act 230, the active speed ratio is unknown, the controller 115 initially commands and ramps the hold current 142 as the current associated with the lowest active speed ratio. Then, in act 235, the controller 115 gradually raises the ramped hold current 142 until an output speed of a powertrain component is detected. Gradually raising the ramped hold current 142 accommodates widely varying, unknown active speed ratios and promotes efficient filling of the forward clutch 15.

Act 237 is to determine whether an output speed of a powertrain component is detected. The powertrain component may be, for example, the shaft 65, the shaft 70, or any other component of the powertrain 7 that rotates as a result of the engagement of forward clutch 15. The speed sensor 145 or the speed sensor 150 may, for example, be used for determining whether an output speed of a powertrain component is detected. If an output speed is not detected, then the acts 235 and 237 may repeat themselves. Alternatively, if an output speed is detected, then act 240 may begin.

In act 240, the modulation mode 176 begins. In the modulation mode 176, the controller sends a modulation current 143 to the valve 77. The modulation current 143 is shown, in FIG. 3, between the points 190 and 195. In the modulation mode 176, as the forward clutch 15 continues to engage, the controller 115 and, for example, the speed sensor 145 or the speed sensor 150 may measure the output speed of the shaft 70. Here, the controller 115 may comprise a proportional-integral-derivative controller (not shown) for using the measured output speed as feedback and, thus, controlling the engagement of the forward clutch 15.

In act 245, a full-on mode 178 may begin, as shown in FIG. 3, at point 195. In the full-on mode 178, the controller 115 communicates a full-on current 144 to the valve 77, which allows enough fluid to enter clutch cavity 37 to fully engage the forward clutch 15.

## Claims

1. A method for hydraulically filling a clutch without using a calibration routine, the clutch comprises a spring and a clutch cavity, the spring and the clutch cavity are positioned inside of the clutch, a valve is associated with the clutch and is configured for allowing a fluid to flow to and from the clutch cavity, the method comprises the steps of:
sending a wakeup current to the valve, the wakeup current is sent to the valve until the clutch cavity is substantially filled with fluid;
determining whether the spring is compressed; and
sending a hold current to the valve that rises relatively gradually to the valve if the spring is compressed.

2. The method of claim 1, wherein the step of determining whether the spring is compressed comprises finding a pressure inflection point that corresponds to the spring beginning to compress.

3. The method of claim 1 or 2, wherein the hold current is initially approximately equivalent to the current necessary for a lowest active speed ratio.

4. The method according to one of the claims 1 to 3, further comprising the steps:
determining whether an output speed of a powertrain component is detected; and
sending a modulation current to the valve, following the step of sending a hold current, if an output speed of a powertrain component is detected.

5. The method according to claim 4, wherein the step of sending a modulation current comprises the step of utilizing a closed loop control system.
